# FASCICULE DE BREVET EUROPEEN

(11) **EP 3 160 225 B1**
(45) Date de publication et mention de la délivrance du brevet: **06.06.2018**
(21) Numéro de dépôt: 15753085.8
(22) Date de dépôt: 30.06.2015
(51) Int. Cl.: A01M 7/00

(54) **PULVERISATEUR MUNI D'UN INCORPORATEUR PERFECTIONNE**
SPRÜHDÜSE MIT VERBESSERTEM INKORPORATOR
SPRAY NOZZLE PROVIDED WITH AN IMPROVED INCORPORATOR

(30) Priorité: 30.06.2014 FR 1456191
(43) Date de publication de la demande: 03.05.2017
(73) Titulaire: Kuhn-Blanchard SAS, 44680 Chemere (FR)
(72) Inventeur: JARRASSIER, Benoît, 44680 Chemere (FR)
(74) Mandataire: Esch, Esther Evelyne
(86) Numéro de dépôt international: PCT/FR2015/051790
(87) Numéro de publication internationale: WO 2016/001571

(56) Documents cités:
- EP-A1- 1 961 299
- EP-A1- 2 084 964
- US-A- 5 609 417

## Description

La présente invention concerne le domaine technique général du machinisme agricole et notamment des appareils d'épandage. Elle se rapporte plus particulièrement à un pulvérisateur comportant un châssis supportant une cuve principale, une rampe de pulvérisation et un incorporateur, l'incorporateur présente un état actif et un état inactif.

Un pulvérisateur agricole est utilisé pour épandre, sous forme de gouttelettes, un produit de traitement sur des plantes. A cet effet, le pulvérisateur comporte divers éléments reliés entre eux par un circuit d'eau. Ces éléments sont une cuve principale contenant la bouillie et des buses de pulvérisation destinées à répartir ladite bouillie sur les plantes à traiter. La pulvérisation consiste à pomper la bouillie, grâce au circuit d'eau, de la cuve principale jusqu'aux buses, tout en déplaçant lesdites buses par rapport aux plantes à traiter. L'utilisation de produits phytosanitaires conditionne la rentabilité et le rendement d'une culture.

Avant de procéder effectivement à la pulvérisation, l'utilisateur doit préparer la bouillie de traitement. En effet, pour des raisons évidentes de stockage, le composé actif de la bouillie est conditionné sous forme concentrée à l'état liquide ou solide. La préparation de la bouillie consiste à diluer un ou plusieurs composés actifs, par exemple des produits phytosanitaires, dans de l'eau. Pour ce faire et dans un souci de sécurité pour l'utilisateur, la plupart des pulvérisateurs agricoles comportent un incorporateur. Celui-ci peut être fixe ou mobile par rapport au pulvérisateur et il est de préférence accessible depuis le sol. L'incorporateur se compose d'un bac dans lequel l'utilisateur déverse le composé actif. Lors de la préparation de la bouillie, le bac est vidangé, via le circuit d'eau, vers la cuve principale.

Certains pulvérisateurs sont munis d'un incorporateur mobile qui passe d'un état inactif à un état actif pour être utilisé. Lors de la préparation de la bouillie, l'utilisateur amène l'incorporateur dans son état actif afin de faciliter le versement du composé actif conditionné sous forme concentrée à l'état liquide ou solide. L'incorporateur est généralement pourvu d'un mécanisme de type parallélogramme permettant de l'escamoter en l'éloignant du sol ou de le rapprocher du sol pour faciliter l'accès. Un tel mécanisme est onéreux et complexe. On sait que le temps d'utilisation de l'incorporateur est très faible comparé au temps global de fonctionnement du pulvérisateur comprenant le remplissage, l'épandage et le rinçage. Lorsque la préparation de la bouillie est finie, l'incorporateur devient inutile mais il continue d'occuper de la place sur le châssis.

Le but de la présente invention vise donc à remédier aux différents inconvénients de l'état de la technique en proposant un pulvérisateur sur lequel l'agencement des différentes parties constitutives est optimisé.

A cet effet, une importante caractéristique de l'invention consiste en ce que le volume occupé par l'incorporateur est variable entre son état actif et son état inactif. De manière avantageuse, le volume occupé par l'incorporateur est variable selon son état d'utilisation. Dans son état inactif, l'incorporateur occupe un volume bien moins important que dans son état actif. L'incorporateur est donc compact dans son état inactif. En réduisant l'encombrement qu'occupe l'incorporateur dans son état inactif, on dégage de la place sur le châssis du pulvérisateur. Cette place dégagée permet d'améliorer l'ergonomie du tableau de commande, d'ajouter un coffre de rangement et/ou même d'augmenter la capacité de la cuve principale dans le but d'augmenter l'autonomie du pulvérisateur.

D'autres caractéristiques de l'invention apparaîtront encore dans les autres sous-revendications et dans la description suivante de deux exemples de réalisation non limitatifs de l'invention représentés sur les dessins annexés sur lesquels :
- la **figure 1** représente un pulvérisateur conforme à l'invention en vue de côté avec un incorporateur dans son état actif,
- la **figure 2** représente le pulvérisateur en vue de côté avec l'incorporateur dans son état inactif,
- la **figure 3** est une vue de détail de l'incorporateur selon la figure 1 prêt à l'emploi,
- la **figure 4** est une vue de détail de l'incorporateur dans son état inactif,
- la **figure 5** est une vue de détail d'un incorporateur selon un autre exemple de réalisation dans un état inactif,
- la **figure 6** est un incorporateur selon un autre exemple de réalisation dans son état actif.

La machine agricole selon l'invention est un pulvérisateur (1) destiné à épandre sur le sol ou à répartir sur la végétation des produits phytosanitaires et/ou des fertilisants liquides pour désherber, pour traiter contre les maladies et pour détruire les insectes nuisibles aux cultures. Le pulvérisateur (1) est également utilisé pour épandre des fertilisants liquides afin de fertiliser les cultures. Un pulvérisateur (1) est utilisé pour les cultures agricoles, pour la viticulture, pour l'arboriculture et pour les espaces verts. Il est alors désigné comme un pulvérisateur agricole.

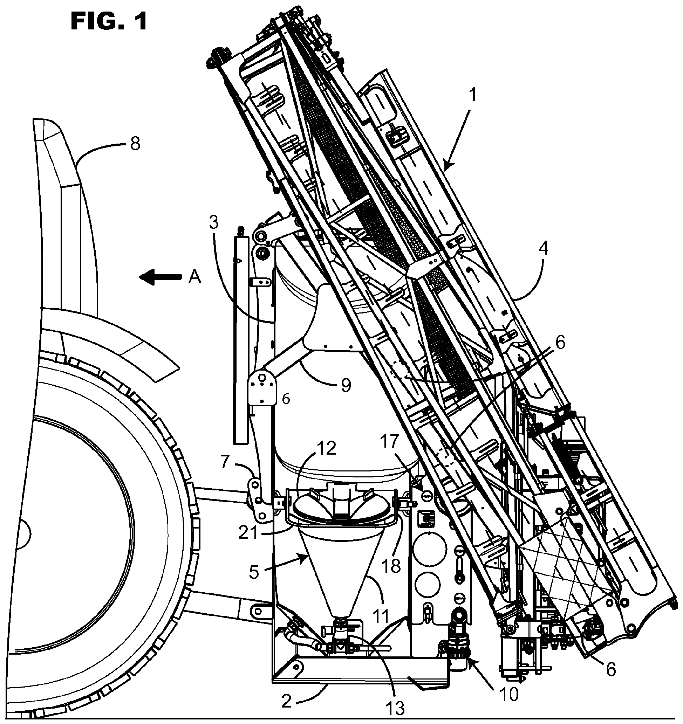

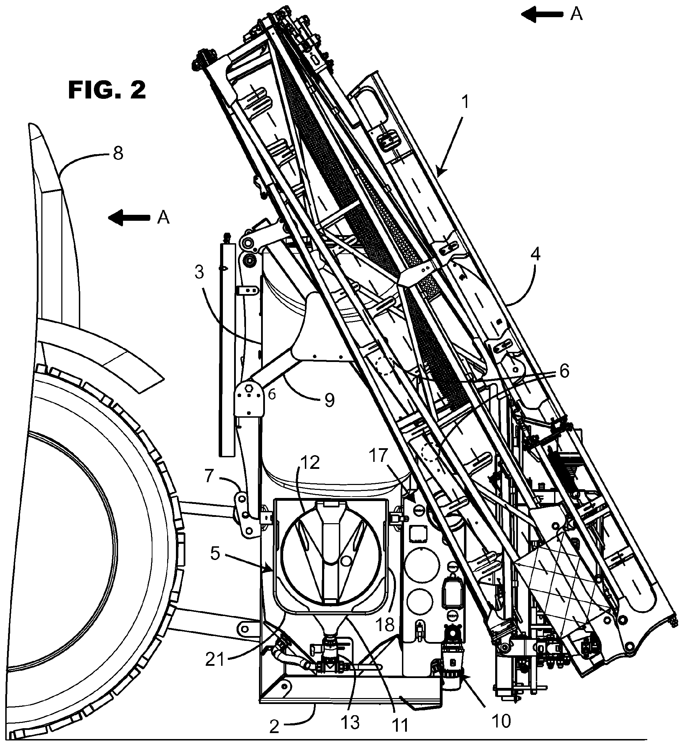

La figure 1 représente un pulvérisateur (1) qui comporte un châssis (2) qui supporte une cuve principale (3), une rampe de pulvérisation (4) et un incorporateur (5). L'incorporateur (5) présente un état actif et un état inactif. L'incorporateur (5) est considéré dans son état actif lorsqu'il est ou lorsqu'il va être utilisé. L'incorporateur (5) est considéré dans son état inactif lorsqu'il n'est pas utilisé. La cuve principale (3) est faite pour contenir la bouillie de traitement et la rampe de pulvérisation (4) comprend une ou plusieurs canalisation(s) supportant des buses (6) de pulvérisation. Certaines buses (6) de pulvérisation sont représentées de manière schématique sur les figures 1 et 2. Il s'agit d'un pulvérisateur à pression et jets projetés. La rampe de pulvérisation (4) est représentée dans sa position repliée de part et d'autre de la cuve principale (3). Les différents tronçons formant la rampe de pulvérisation (4) sont repliés pour le transport afin d'avoir un encombrement réduit.

Dans cet exemple de réalisation, le pulvérisateur (1) est de type porté. Le châssis (2) comporte un système d'attelage (7) pour pouvoir être attelé au dispositif d'attelage trois points d'un tracteur (8). Le tracteur (8) est amené à déplacer et à animer le pulvérisateur (1) suivant une direction d'avance et un sens d'avance indiqué par la flèche (A). Dans la suite de la description, les notions suivantes "avant", "arrière" et "devant", "derrière" sont définies par rapport au sens d'avance (A). Il va de soi que la présente invention concerne également des pulvérisateurs de type traîné ainsi que des pulvérisateurs automoteurs.

Lors du travail, le pulvérisateur (1) est déplacé sur un champ comportant des plantes à traiter. La rampe de pulvérisation (4) est disposée transversalement à ladite direction d'avance (A), de part et d'autre d'un plan vertical médian du pulvérisateur (1). Ladite rampe (4) est liée audit châssis (2) au moyen d'un dispositif de liaison (9). La hauteur de pulvérisation des buses (6) peut ainsi être adaptée à la taille plus ou moins importante des plantes à traiter. Pour sa part, la bouillie de traitement est pompée, au moyen d'un circuit d'eau (10), depuis la cuve principale (3) pour être déposée, grâce aux buses (6) de pulvérisation, sur les plantes.

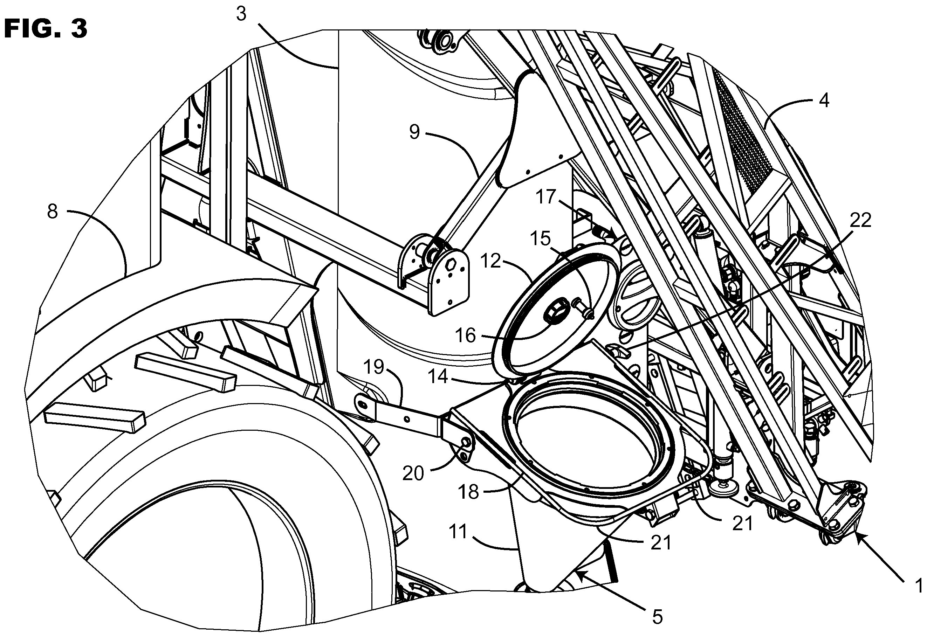

Le pulvérisateur (1) comporte un incorporateur (5) qui a pour fonction d'incorporer, de manière progressive, les produits phytosanitaires dans la cuve principale (3) sans que l'utilisateur soit en contact avec eux. Les produits phytosanitaires peuvent être sous forme liquide ou solide. Généralement, les produits liquides sont stockés sous forme concentrée dans des bidons. L'incorporateur (5) a pour rôle de faciliter les manipulations puisqu'il évite à l'utilisateur de verser les produits phytosanitaires par l'ouverture supérieure de la cuve principale (3). L'incorporateur (5) est accessible depuis le sol dans son état actif, tel que représenté sur les figures 1 et 3, ce qui facilite le versement des produits phytosanitaires dans l'incorporateur (5). La préparation de la bouillie de traitement consiste à diluer un ou plusieurs produits phytosanitaires dans de l'eau. L'opération d'incorporation est donc nécessaire pour la préparation de la bouillie de traitement avant de procéder effectivement à la pulvérisation. Pour ce faire, l'utilisateur déverse les produits phytosanitaires dans l'incorporateur (5) puis transfert le contenu de l'incorporateur (5) vers la cuve principale (3) via le circuit d'eau (10).

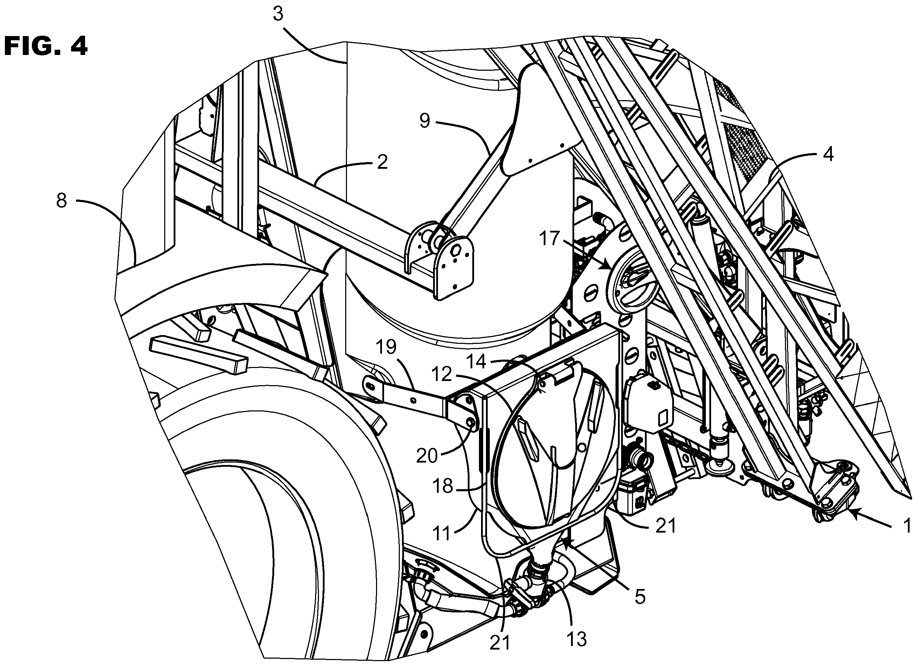

La préparation de la bouillie de traitement se fait généralement à la ferme sur une aire de remplissage, ceci pour limiter les risques de pollutions accidentelles puisque le produit manipulé est concentré. L'incorporateur (5) est disposé pour l'opération d'incorporation comme représenté sur la figure 1. L'incorporateur (5) est placé sur le côté gauche du pulvérisateur (1), compte tenu de la direction d'avance (A). L'incorporateur (5) s'étend en dehors du gabarit routier dans son état actif (figure 3). Il est par exemple décalé par rapport à la rampe de pulvérisation (4) pour que l'utilisateur dispose d'un environnement de travail dégagé pour déverser les produits phytosanitaires. L'incorporateur (5) est avantageusement mobile par rapport au châssis (2) du pulvérisateur (1) puisqu'il est rangé lorsqu'il n'est pas utilisé (figures 2 et 4). De façon alternative, l'incorporateur (5) est placé sur le côté droit ou à l'arrière du pulvérisateur (1).

Le pulvérisateur (1) est utilisé pour fractionner la bouillie de traitement en gouttelettes via les buses (6) et pour la répartir sur une surface maximum avec un minimum de liquide. Les produits phytosanitaires doivent être dosés avec précaution et épandus avec précision de façon très uniforme. Au préalable de l'étape de pulvérisation, il est nécessaire de remplir la cuve principale (3) d'eau claire et d'incorporer les produits phytosanitaires. Ces différentes étapes sont gérées grâce à un tableau de commande (17). De manière générale, le circuit d'eau (10) est amené à réaliser différentes fonctions : la fonction remplissage, la fonction incorporation, la fonction pulvérisation, la fonction rinçage et la fonction vidange. Pour cela, le circuit d'eau (10) comporte notamment au moins une pompe, un réseau de conduites et plusieurs vannes. Les vannes sont placées sur le tableau de commande (17) qui s'étend au voisinage de l'incorporateur (5). Le tableau de commande (17) et les vannes sont facilement accessibles par l'utilisateur. Le positionnement des vannes détermine le type de fonction réalisé par le circuit d'eau (10). La pompe permet de remplir le pulvérisateur (1), de brasser la bouillie de traitement et de pulvériser. La pompe est par exemple entraînée en rotation par le tracteur (8). Dans l'exemple de réalisation d'un pulvérisateur porté, tel que représenté sur les figures 1 et 2, la pompe est logée entre le fond de la cuve principale (3) et l'embase du châssis (2).

Selon une caractéristique importante de l'invention, le volume occupé par l'incorporateur (5) est variable entre son état actif et son état inactif. Avec un incorporateur (5) de volume variable selon son état d'utilisation, on obtient de la place supplémentaire sur le pulvérisateur (1). Selon une autre caractéristique importante, le volume occupé par l'incorporateur (5) dans son état inactif est réduit par rapport au volume occupé dans son état actif. L'incorporateur (5) est donc plutôt compact dans son état inactif, lorsqu'il n'est pas utilisé. En réduisant l'encombrement qu'occupe l'incorporateur (5) dans son état inactif, on libère de la place sur le pulvérisateur (1). Cette place dégagée permet alors d'améliorer l'ergonomie du tableau de commande, d'ajouter un coffre de rangement et/ou même d'augmenter la capacité de la cuve principale (3) dans le but d'augmenter l'autonomie du pulvérisateur (1). L'autonomie d'un pulvérisateur (1) est étroitement liée au volume embarqué de bouillie de traitement. La capacité de la cuve principale (3) peut donc être augmentée puisque l'encombrement de l'incorporateur (5) est réduit lorsqu'il n'est pas utilisé. La capacité de la cuve principale (3) est augmentée dans les limites du gabarit routier. L'incorporateur (5) selon l'invention est embarqué sur le pulvérisateur (1), il reste toujours fixé sur le pulvérisateur (1) même lorsqu'il n'est pas utilisé. L'incorporateur (5) dispose donc d'une capacité importante dans son état actif et d'un faible encombrement dans son état inactif.

Le pulvérisateur (1) représenté sur la figure 2 est identique à celui de la figure 1 à l'exception de la représentation de l'incorporateur (5). L'incorporateur (5) est représenté dans son état inactif, lorsqu'il n'est pas utilisé. Cet état est représenté plus en détail sur la figure 4. On remarque que l'incorporateur (5) est très compact. Il ne s'étend pas au-delà du gabarit routier ce qui est important pour un tel pulvérisateur (1) puisqu'il est nécessaire de passer par les routes et chemins pour accéder aux différents champs. Sur ces figures, le volume de l'incorporateur (5) est réduit dans sa largeur. L'incorporateur (5) est rangé verticalement contre la cuve principale (3).

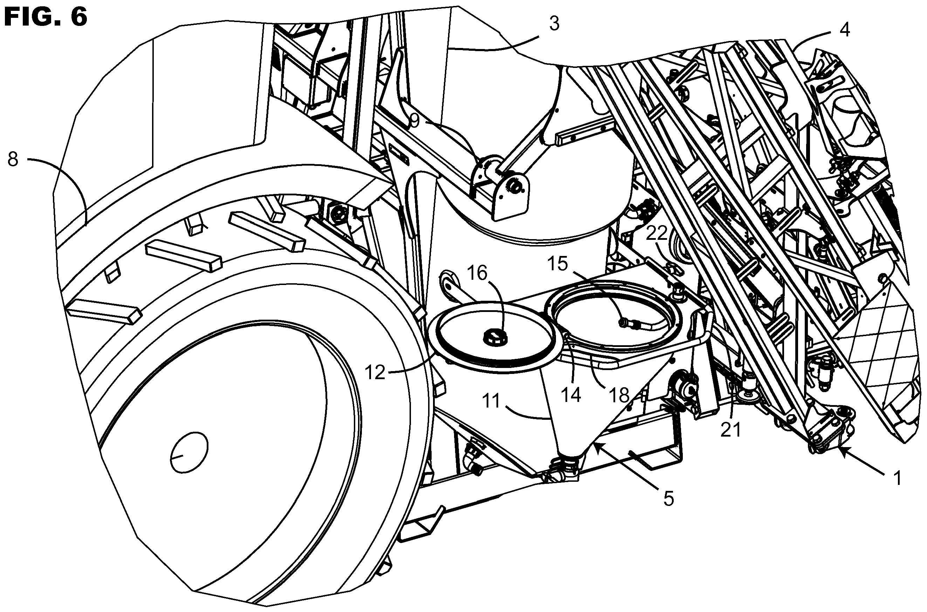

D'une manière avantageuse, l'incorporateur (5) comporte un corps (11), un couvercle (12) et un dispositif d'aspiration (13). Le corps (11) est avantageusement déformable. Il est réalisé dans un matériau souple qui résiste aux agressions chimiques. Le corps (11) se compose d'une seule pièce d'épaisseur sensiblement constante. Le corps (11) présente une forme d'entonnoir dans son état actif. Le corps (11) peut être obtenu par moulage, par assemblage ou par un autre procédé. En utilisant le moulage, l'épaisseur du corps (11) est relativement faible tout en étant constante. Le corps (11) pourra par exemple être réalisé dans un matériau thermoplastique élastomère. La forme de l'entonnoir peut également être obtenue par assemblage. Le collage est un procédé d'assemblage qui permet de réaliser un entonnoir ou un cône à partir d'une portion de disque. Les deux côtés de la portion de disque vont se chevaucher pour permettre le collage. Une alternative au collage est le soudage par ultrasons lorsque le corps (11) est une matière thermoplastique. L'entonnoir est orienté avec l'ouverture de remplissage vers le haut. L'ouverture de remplissage est plus grande que l'ouverture proche du dispositif d'aspiration (13). Sa forme conique permet une incorporation parfaite des produits. Le couvercle (12) a pour fonction de recouvrir l'ouverture de remplissage. L'ouverture de remplissage est avantageusement circulaire. Le corps (11) est recouvert dans sa partie supérieure d'un couvercle (12) et comporte un dispositif d'aspiration (13) dans sa partie inférieure. Le dispositif d'aspiration (13) est par exemple un système à venturi. Les produits phytosanitaires versés dans l'incorporateur (5) tombent par gravité. Les produits phytosanitaires sont propulsés dans la cuve principale (3) par dépression grâce au système à venturi. Le couvercle (12) est étanche pour éviter l'introduction de corps étrangers dans le corps (11) de l'incorporateur (5). Ce couvercle (12) est représenté dans sa position ouverte sur la figure 3. Il permet à l'utilisateur de verser les produits dans l'incorporateur (5). Le couvercle (12) est articulé sur le corps (11), il pivote autour d'un axe (14) sensiblement horizontal. L'axe (14) est dirigé parallèlement à la direction d'avance (A) tel que représenté sur les figures 1 à 5. Le couvercle (12) est donc soulevé vers le haut pour pouvoir accéder à l'ouverture de remplissage. On remarque que l'ouverture du couvercle (12) est limitée par la cuve principale (3) sur la figure 3. Le couvercle (12) permet également de protéger l'utilisateur lors du rinçage de l'incorporateur (5). À cet effet, l'incorporateur (5) est équipé d'un système de rinçage (15). Le système de rinçage (15) permet de rincer l'intérieur de l'incorporateur (5). Dans l'exemple de réalisation représenté à la figure 3, le système de rinçage (15) est un gyrolaveur disposé dans le couvercle (12). L'incorporateur (5) peut également être équipé d'un rince-bidon (figure 6) pour rincer les emballages de produits phytosanitaires. Le système de rinçage (15) et le rince-bidon sont alimentés en eau claire par une cuve de rinçage ou par une source extérieure. L'eau de rinçage est incorporée dans la cuve principale (3). Dans une alternative non représentée, l'axe (14) est sensiblement vertical. De cette manière, l'ouverture du couvercle (12) se fait par rotation à droite ou à gauche. Le couvercle (12) est alors décalé latéralement par rapport à l'ouverture de remplissage.

De manière particulièrement avantageuse, l'incorporateur (5) est muni d'un dispositif d'échappement d'air (16) qui permet à l'air de s'échapper lorsque l'incorporateur (5) passe de l'état actif à l'état inactif. Ainsi, l'air contenu dans le corps (11) de l'incorporateur (5) peut s'échapper au fur et à mesure de la réduction de l'incorporateur (5). Le dispositif d'échappement d'air (16) est prévu dans le couvercle (12). Le couvercle (12) est suffisamment rigide pour pouvoir supporter le dispositif de rinçage (15) et le dispositif d'échappement d'air (16).

Selon l'exemple de réalisation représenté sur les figures 1 à 5, l'incorporateur (5) comporte une ossature (18) articulée sur le châssis (2). L'ossature (18) supporte le corps (11) de l'incorporateur (5). Le couvercle (12) couvrant le corps (11) est fixé sur l'ossature (18). L'ossature (18) est liée au châssis (2) au moyen de bras (19). L'ossature (18) est liée aux bras (19) au moyen d'une articulation (20) d'axe sensiblement horizontal et parallèle à la direction d'avance (A). Lorsque l'incorporateur (5) est placé dans son état actif, tel que représenté sur les figures 1 et 3, l'ossature (18) est sensiblement horizontal de manière à ce que l'ouverture de remplissage est accessible pour déverser les produits phytosanitaires. Le couvercle (12) s'étend dans un plan sensiblement horizontal. On remarque que l'ossature (18) est légèrement inclinée vers le sol du côté opposé à celui fixé à l'articulation (20). Pour passer l'incorporateur (5) de son état actif à son état inactif, et inversement, il comporte au moins une poignée (21). L'ossature (18) présente avantageusement deux poignées (21) disposées de chaque côté de l'ouverture de remplissage. Les figures 2 et 4 montrent l'incorporateur (5) dans son état inactif. L'ossature (18) a pivoté autour de l'articulation (20) pour se retrouver dans une position sensiblement verticale. L'articulation (20) est avantageusement parallèle à l'axe (14) du couvercle (12). Le corps (11) conique a été aplati pour réduire le volume de l'incorporateur (5). La réduction de volume se fait dans la largeur de l'incorporateur (5), c'est-à-dire dans la direction transversale à la direction d'avance (A). Le pivotement de l'ossature (18) en direction du sol écrase le corps (11) et le couvercle (12) s'étend dans un plan sensiblement vertical. Dans cette position de non utilisation de l'incorporateur (5), la poignée (21) se retrouve dans le voisinage du dispositif d'aspiration (13).

La figure 6 représente un incorporateur selon un autre exemple de réalisation. L'axe (14) du couvercle (12) est sensiblement horizontal et est dirigé perpendiculairement à la direction d'avance (A). L'ouverture du couvercle (12) se fait par rotation vers le haut et sur le côté par rapport à l'ouverture de remplissage. Avec un dégagement sur le côté du couvercle (12), l'ouverture du couvercle (12) est plus importante puisque le couvercle (12) ne bute pas contre la cuve principale (3). On remarque que le système de rinçage (15) est prévu sur l'ossature (18) plutôt que sur le couvercle (12). Le système de rinçage (15) permet également de rincer les bidons. Le système de rinçage (15) est alimenté via le connecteur disponible au niveau de la partie supérieure de l'ossature (18).

De préférence, l'incorporateur (5) comporte un système d'indexage (22). Ce système d'indexage (22) permet de maintenir l'incorporateur (5) dans son état actif ou dans son état inactif. Il est constitué d'une poignée équipée d'un ressort.

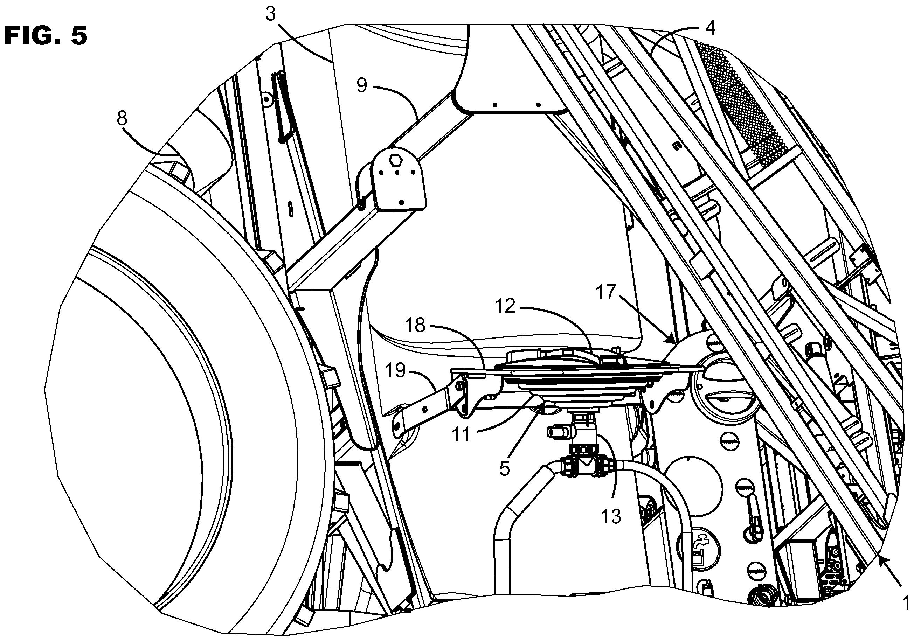

Selon l'autre exemple de réalisation représenté à la figure 5, le volume de l'incorporateur (5) est réduit dans sa hauteur. Le couvercle (12) et l'ossature (18) conservent leur position de l'état actif représenté à la figure 1, c'est-à-dire qu'ils restent dans un plan sensiblement horizontal. Pour passer de l'état actif à l'état inactif, le corps (11) se replie sur lui-même de manière à ce que le dispositif d'aspiration (13) se retrouve proche du couvercle (12). Dans cet exemple de réalisation, l'ossature (18) est fixée aux bras (19) par un système de translation plutôt que par une articulation (20) d'axe horizontal. Pour un tel repliage de l'incorporateur (5), les tuyaux reliés au dispositif d'aspiration (13) doivent être suffisamment longs pour permettre la mise en position de non-utilisation. Un tel repliage de l'incorporateur (5) trouve une application sur un pulvérisateur du type traîné ou un automoteur. L'incorporateur (5) peut alors être placé sous le châssis ou sous la cuve. Il peut aussi être prévu pour un pulvérisateur porté.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Pulvérisateur (1) comportant un châssis (2) supportant une cuve principale (3), une rampe de pulvérisation (4) et un incorporateur (5), ***caractérisé en ce que*** le volume occupé par l'incorporateur (5) est variable entre son état actif et son état inactif.

2. Pulvérisateur selon la revendication 1, ***caractérisé en ce que*** le volume occupé par l'incorporateur (5) dans son état inactif est réduit par rapport au volume occupé par l'incorporateur (5) dans son état actif.

3. Pulvérisateur selon la revendication 1 ou 2, ***caractérisé en ce que*** le volume occupé par l'incorporateur (5) dans son état inactif est réduit dans sa largeur.

4. Pulvérisateur selon la revendication 1 ou 2, ***caractérisé en ce que*** le volume occupé par l'incorporateur (5) dans son état inactif est réduit dans sa hauteur.

5. Pulvérisateur selon l'une quelconque des revendications 1 à 4, ***caractérisé en ce que*** l'incorporateur (5) est muni d'un dispositif d'échappement d'air (16).

6. Pulvérisateur selon l'une quelconque des revendications 1 à 5, ***caractérisé en ce que*** l'incorporateur (5) comporte un corps (11), un couvercle (12) et un dispositif d'aspiration (13), le corps (11) est réalisé dans un matériau souple et déformable.

7. Pulvérisateur agricole selon la revendication 6, ***caractérisé en ce que*** le corps (11) se compose d'une seule pièce d'épaisseur sensiblement constante.

8. Pulvérisateur selon l'une quelconque des revendications 1 à 7, ***caractérisé en ce que*** l'incorporateur (5) comporte une ossature (18) articulée sur le châssis (2), l'ossature (18) supporte le corps (11).

9. Pulvérisateur selon la revendication 8, ***caractérisé en ce que*** l'ossature (18) est articulée sur le châssis (2) au moyen d'une articulation (20) d'axe sensiblement horizontal et parallèle à la direction d'avance (A).

10. Pulvérisateur selon l'une quelconque des revendications 1 à 9, ***caractérisé en ce que*** l'incorporateur (5) comporte au moins une poignée (21).

## Patentansprüche

1. Feldspritze (1) mit einem Rahmen (2), der einen Hauptbehälter (3), einen Spritzbalken (4) und eine Einspülvorrichtung (5) trägt, ***dadurch gekennzeichnet,* dass** das von der Einspülvorrichtung (5) eingenommene Volumen zwischen derem aktiven und derem inaktiven Zustand veränderbar ist.

2. Feldspritze nach Anspruch 1, ***dadurch gekennzeichnet,* dass** das von der Einspülvorrichtung (5) in ihrem inaktiven Stand eingenommene Volumen bezüglich des von der Einspülvorrichtung (5) in ihrem aktiven Stand eingenommene Volumens verringert ist.

3. Feldspritze nach Anspruch 1 oder 2, ***dadurch gekennzeichnet,* dass** das von der Einspülvorrichtung (5) in ihrem inaktiven Stand eingenommene Volumen in der Breite verringert ist.

4. Feldspritze nach Anspruch 1 oder 2, ***dadurch gekennzeichnet,* dass** das von der Einspülvorrichtung (5) in ihrem inaktiven Stand eingenommene Volumen in der Höhe verringert ist.

5. Feldspritze nach irgendeinem der Ansprüche 1 bis 4, ***dadurch gekennzeichnet,* dass** die Einspülvorrichtung (5) mit einer Luftauslassvorrichtung (16) versehen ist.

6. Feldspritze nach irgendeinem der Ansprüche 1 bis 5, ***dadurch gekennzeichnet,* dass** die Einspülvorrichtung (5) einen Körper (11), eine Abdeckung (12) und eine Saugvorrichtung (13) aufweist, wobei der Körper (11) aus einem flexiblen und verformbaren Material gebildet ist.

7. Feldspritze nach Anspruch 6, ***dadurch gekennzeichnet,* dass** der Körper (11) aus einem einzigen Stück mit im wesentlichen konstanter Dicke gebildet ist.

8. Feldspritze nach irgendeinem der Ansprüche 1 bis 7, ***dadurch gekennzeichnet,* dass** die Einspülvorrichtung (5) ein an dem Rahmen (2) angelenktes Tragwerk (18) aufweist, wobei das Tragwerk (18) den Körper (11) trägt.

9. Feldspritze nach Anspruch 8, ***dadurch gekennzeichnet,* dass** das Tragwerk (18) mittels eines Gelenks (20) mit einer im wesentlichen horizontalen und zur Vorschubrichtung (A) parallelen Achse an dem Rahmen (2) angelenkt ist.

10. Feldspritze nach irgendeinem der Ansprüche 1 bis 9, ***dadurch gekennzeichnet,* dass** die Einspülvorrichtung (5) mindestens einen Griff (21) aufweist.

## Claims

1. Sprayer (1) including a chassis (2) carrying a main container (3), a spray boom (4) and an incorporation device (5), ***characterized in* that** the volume occupied by the incorporation device (5) can be varied between its active state and its inactive state.

2. Sprayer according to claim 1, ***characterized in* that** the volume occupied by the incorporation device (5) in its inactive state is reduced compared with the volume occupied by the incorporation device (5) in its active state.

3. Sprayer according to claim 1 or 2, ***characterized in* that** the volume occupied by the incorporation device (5) in its inactive state has a reduced width.

4. Sprayer according to claim 1 or 2, ***characterized in* that** the volume occupied by the incorporation device (5) in its inactive state has a reduced height.

5. Sprayer according to any one of the claims 1 to 4, ***characterized in* that** the incorporation device (5) is fitted with an air-exhaust device (16).

6. Sprayer according to any one of the claims 1 to 5, ***characterized in* that** the incorporation device (5) includes a body (11), a cover (12) and a suction device (13), the body (11) being made from a flexible and deformable material.

7. Agricultural sprayer according to claim 6, ***characterized in* that** the body (11) is comprised of a single part of a substantially constant thickness.

8. Sprayer according to any one of the claims 1 to 7, ***characterized in* that** the incorporation device (5) includes a framework (18) articulated to the chassis (2), the framework (18) supporting the body (11).

9. Sprayer according to claim 8, ***characterized in* that** the framework (18) is articulated to the chassis (2) by means of an articulation (20) with an axis substantially horizontal and parallel to the direction of advance (A).

10. Sprayer according to any one of the claims 1 to 9, ***characterized in* that** the incorporation device (5) includes at least one grip (21).
